# EUROPÄISCHE PATENTSCHRIFT

(11) **EP 1 504 200 B1**
(45) Veröffentlichungstag und Bekanntmachung des Hinweises auf die Patenterteilung: **10.10.2007**
(21) Anmeldenummer: 03727344.8
(22) Anmeldetag: 23.04.2003
(51) Int. Cl.: F16C 33/10, F16C 17/00

(54) **VERFAHREN ZUR HERSTELLUNG EINES GLEITELEMENTS**
METHOD FOR PRODUCTION OF A SLIDE ELEMENT
PROCEDE DE PRODUCTION D' UN ELEMENT A GLISSEMENT

(30) Priorität: 24.04.2002 DE 10218208
(43) Veröffentlichungstag der Anmeldung: 09.02.2005
(73) Patentinhaber: DIACCON GmbH, 90762 Fürth (DE)
(72) Erfinder: ROSIWAL, Stefan, 96049 Bamberg (DE); RÜFFER, Martin, 92284 Poppenricht (DE); JENTSCH, Hans-Georg, 91054 Erlangen (DE)
(74) Vertreter: Gassner, Wolfgang
(86) Internationale Anmeldenummer: PCT/EP2003/004226
(87) Internationale Veröffentlichungsnummer: WO 2003/091586

(56) Entgegenhaltungen:
- EP-A- 0 300 699
- EP-A- 0 543 461
- US-A- 4 789 251
- US-A- 5 769 544

## Beschreibung

Die Erfindung betrifft ein Gleitelement nach dem Oberbegriff des Anspruchs 1. Sie betrifft ferner ein Verfahren zur Herstellung des Gleitelements.

Ein gattungsgemäßes Gleitelement ist aus der US 5,108,813 sowie der. WO 00/26433 bekannt. Dabei wird zur Herabsetzung des Reibungskoeffizienten und des Abriebs der Diamantschicht vorgeschlagen, die zwischen den Diamantkristallen gebildeten Zwickel mit einem weichen Metall zu verfüllen. In der Praxis hat sich allerdings gezeigt, dass die aus dem weichen Metall bestehende Füllung relativ schnell abgetragen wird. Damit verliert das Gleitelement seine Notlaufeigenschaften.

Aus der EP 0 529 327 A1 ist ein gebranntes keramisches Erzeugnis mit einer strukturierten Oberfläche bekannt. Zur Verbesserung der tribologischen Eigenschaften wird vorgeschlagen, die Strukturierung in regelmäßiger Anordnung von gleichförmigen Vertiefungen auszubilden. Das gebrannte keramische Erzeugnis weist zwar gute tribologische Eigenschaften. Gleichwohl ist die Abriebfestigkeit bei extremen Belastungen nicht ausreichend.

Aus der EP 0 617 207 B1 ist ein Lager bekannt, bei dem einander gegenüberliegende tribologisch beanspruchte Kontaktflächen mit einer Diamantschicht versehen sind. Ein solches Lager weist für bestimmte Anwendungen keine ausreichende Trokken- und Notlaufeigenschaften auf.

Aus der DE 197 16 330 A1 ist ein Verfahren zur Herstellung einer Beschichtung auf einem Schleifwerkzeug bekannt. Es wird dort vorgeschlagen, die Diamantschicht besonders rau auszuführen. Ein solche Diamantschicht eignet sich nicht zur Herstellung von tribologisch belasteten Oberflächen bei Gleitringen oder Lagern.

Aus der EP 0 614 999 B1 ist ein Bauteil eines Lagers oder einer Dichtungsanordnung bekannt, bei dem eine Verschleißfläche aus einer aus polykristallinem Diamant hergestellten Schicht gebildet ist. Die Diamantschicht ist so ausgebildet, dass ihre tribologisch belastete Oberfläche einen verminderten Verschleißwiderstand aufweist. Zu diesem Zweck ist die Oberfläche aus einer weichen nanokristallinen Diamantschicht gebildet, welche auf einer harten polykristallinen Diamantschicht sich befindet. In der Praxis zeigt eine solche Diamantschicht keine zufrieden stellenden Not- und Trockenlaufeigenschaften.

Gerade im Bereich hochbeanspruchter Bauteile, insbesondere bei Gleitlagern und Gleitringdichtungen, sind verbesserte Not- und Trockenlaufeigenschaften erwünscht. Insbesondere beim Trockenlauf treten plötzlich sehr hohe Reibwerte und/oder Reibwertschwankungen auf. Derartige Reibwerte und/oder Reibwertschwankungen zerstören auch Gleitelemente, welche mit einer herkömmlichen Diamantschicht beschichtet sind.

Aufgabe der Erfindung ist es, die Nachteile nach dem Stand der Technik zu beseitigen. Es soll insbesondere ein Verfahren zur Herstellung eines Gleitelements bereitgestellt werden, das verbesserte Not- und Trockenlaufeingenschaften, sowie eine erhöhte Beständigkeit gegen korrosive Medien aufweist.

Diese Aufgabe wird durch die Merkmale des Anspruchs 1 gelöst. Zweckmäßige Ausgestaltungen ergeben sich aus den Merkmalen der Ansprüche 2 bis 12.

Nach Maßgabe der Erfindung ist zur Herstellung eines erfindungsgemäßen Gleitelements ein Verfahren mit folgenden Schritten vorgesehen:
Herstellen von Ausnehmungen einer vorgegebenen Tiefe in der Oberfläche des Substrats und
Aufbringen einer Diamantschicht mittels eines CVD-Verfahrens auf die Oberfläche derart, dass der mittlere maximale Rauwert Rz der Diamantschicht kleiner ist als die Tiefe der Ausnehmungen.

Durch das Verfahren wird eine Diamantschicht mit reproduzierbaren Ausnehmungen zur Aufnahme von Abrieb erzeugt, wobei die Tiefe der Ausnehmungen größer als der mittlere maximale Rauwert Rz ist.

Ein derartiges Gleitelement weist überraschenderweise drastisch verbesserte Not- und Trockenlaufeigenschaften auf. Das wird nach derzeitigem Kenntnisstand darauf zurückgeführt, dass insbesondere beim Trockenlauf ein aus nanokristallinem Diamant und Grafit bestehender Abrieb gebildet wird. Der Abrieb sammelt sich bei herkömmlichen Diamantschichten an der Oberfläche in den Vertiefungen zwischen den Diamantkristallen an. Sobald sämtliche Vertiefungen aufgefüllt sind, wird ein drastischer Anstieg des Reibwerts beobachtet. Infolgedessen kommt es zu einer Zerstörung der Diamantschicht. Indem erfindungsgemäß Ausnehmungen in der Diamantschicht vorgesehen sind, deren Tiefe größer als der mittlere maximale Rauwert Rz ist, werden weitere Räume zur Aufnahme des Abriebs geschaffen. Die Not- und Trockenlaufeigenschaften werden drastisch verbessert.

Unter dem "mittleren maximalen Rauwert Rz" wird die maximale Rauheitsprofilhöhe im Sinne der DIN EN ISO 4287 verstanden. Es handelt sich um die Summe aus der Höhe der größten Profilspitze Rp und der Tiefe des größten Profiltals Rv des Rauheitsprofils innerhalb einer Einzelmessstrecke.

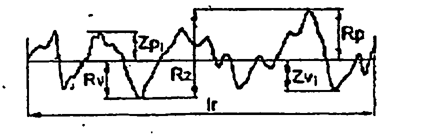

Als senkrechter Abstand vom höchsten zum tiefsten Profilpunkt ist Rz ein Maß für die Streubreite der Rauheitsordinatenwerte. Rz wird als arithmetisches Mittel aus den maximalen Profilhöhen von 5 Einzelmessstrecken lr im Rauheitsprofil ermittelt.

Bei den erfindungsgemäß vorgeschlagenen Ausnehmungen handelt es sich nicht um zufällig bei der Herstellung der Diamantschicht entstehende Ausnehmungen. Es handelt sich um Ausnehmungen, die reproduzierbar, vorzugsweise in einer vorgegebenen Anordnung, hergestellt werden. Die Ausnehmungen werden nach der Erfindung vor dem Auftragen der Diamantenschicht in eine Oberfläche des Substrats eingebracht. Die erfindungsgemäß vorgesehenen Ausnehmungen unterscheiden sich in ihrer Dimension klar von den zwischen Diamantkristallen gebildeten Vertiefungen z. B. Zwickeln. Die erfindungsgemäßen Ausnehmungen sind in ihrer Tiefe größer ausgebildet, als die Vertiefungen.

Zweckmäßigerweise ist der mittlere maximale Rauwert Rz im Bereich von 0,1 bis 5,0 µm. Diamantschichten mit einem solchen mittleren maximalen Rauwert Rz eignen sich besonders gut zur Herstellung von Gleitringdichtungen und Gleitlagern. Diamantschichten mit einem solchen mittleren maximalen Rauwert Rz zeigen auch beim Trockenlauf keinen besonders hohen Abrieb. Der Abrieb ist jedenfalls so gering, dass er in den erfindungsgemäßen Ausnehmungen aufgenommen werden kann.

Zweckmäßigerweise sind die Ausnehmungen als lineare Strukturen ausgebildet. Die Ausnehmungen können insbesondere gerade oder sichelförmig ausgebildet sein. Die linearen Strukturen verlaufen zweckmäßigerweise schräg oder quer zu einer Gleitrichtung. Nach einer weiteren Ausgestaltung können die Ausnehmungen zum Rand der Diamantschicht hin sich öffnen, so dass sich darin aufgenommener Abrieb abführbar ist. Ein Austrag des Abriebs am Rand der Diamantschicht erhöht weiter die Not- und Trockenlaufeigenschaften des Gleitelements.

Eine Breite der Ausnehmungen kann zwischen 0,5 µm und 10 mm liegen. Weiter hat es sich als zweckmäßig erwiesen, dass die Ausnehmungen ein netzartiges Muster oder auch muldenartig ausgebildet sind.

Vorteilhafterweise ist ein Anteil von 1 bis 95 % der Oberfläche der Diamantenschicht durch die Ausnehmungen gebildet. Die Ausnehmungen können also auch einen überwiegenden Teil der Oberfläche bilden. Eine tribologisch belastete Kontaktfläche der Diamantschicht besteht in diesem Fall lediglich auch einzelnen, vorzugsweise regelmäßig angeordneten, Inseln.

Nach einer weiteren Ausgestaltung ist das Substrat aus einer Keramik, vorzugsweise SiC, oder aus einem Metall oder einem Metall-Keramik-Verbundwerkstoff hergestellt.

Die Diamantschicht wird erfindungsgemäß mittels eines CVD-Verfahrens auf die Oberfläche aufgebracht. Derartige Verfahren sind nach dem Stand der Technik bekannt und in der Literatur beschrieben, z. B. in K. Bachmann, W. van Enckewort, "Diamond Deposition Technologies" in Diamond and Related Materials (1), 1992, S. 1021 - 1034.

Die Ausnehmungen können mechanisch, durch Ätzen oder mittels LASER hergestellt werden.

Nachfolgend werden anhand der Zeichnungen vorteilhafte Ausgestaltungen der Erfindungen näher erläutert. Es zeigen:
- Fig. 1: eine rasterelektronenmikroskopische (REM) Aufnahme einer Diamantschicht nach dem Stand der Technik,
- Fig. 2a - c: REM-Aufnahmen erfindungsgemäßer Diamantschichten in verschiedenen Vergrößerungen,
- Fig. 3: eine perspektivische Darstellung einer erfindungsgemäßen Diamantschicht,
- Fig. 4a, b: schematische Darstellungen verschiedener Ausnehmungsmuster,
- Fig. 5: das Ergebnis eines Trockenlauftests unter Verwendung einer herkömmlichen Diamantschicht,
- Fig. 6: das Ergebnis eines Trockenlauftests unter Verwendung einer erfindungsgemäßen Diamantschicht,
- Fig. 7: eine REM-Aufnahme einer herkömmlichen Diamantschicht mit Diamanterhebungen,
- Fig. 8: eine REM-Aufnahme einer weiteren erfindungsgemäßen Diamantschicht,
- Fig. 9a: Ergebnisse verschiedener Messungen beim Trokkenlaufen und
- Fig. 9b: eine schematische Darstellung der beim Trokkenlaufen sich abspielenden Vorgänge.

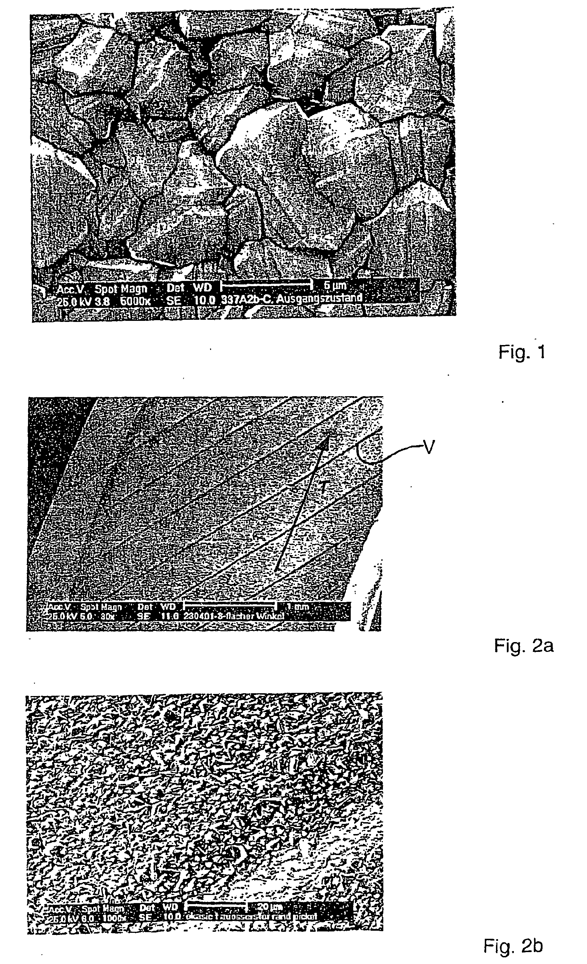

In Fig. 1 ist eine REM-Aufnahme einer Oberfläche einer herkömmlichen Diamantschicht gezeigt, welche mittels eines CVD-Verfahrens auf einem Substrat, z. B. SiC, abgeschieden worden ist. Die Topografie der Oberfläche wird geprägt durch die {111} und {100}-Flächen der Diamantkristalle. Zwischen den Diamantkristallen befinden sich Vertiefungen. Der mittlere maximale Rauwert Rz der gezeigten herkömmlichen Diamantschicht beträgt 1,1.

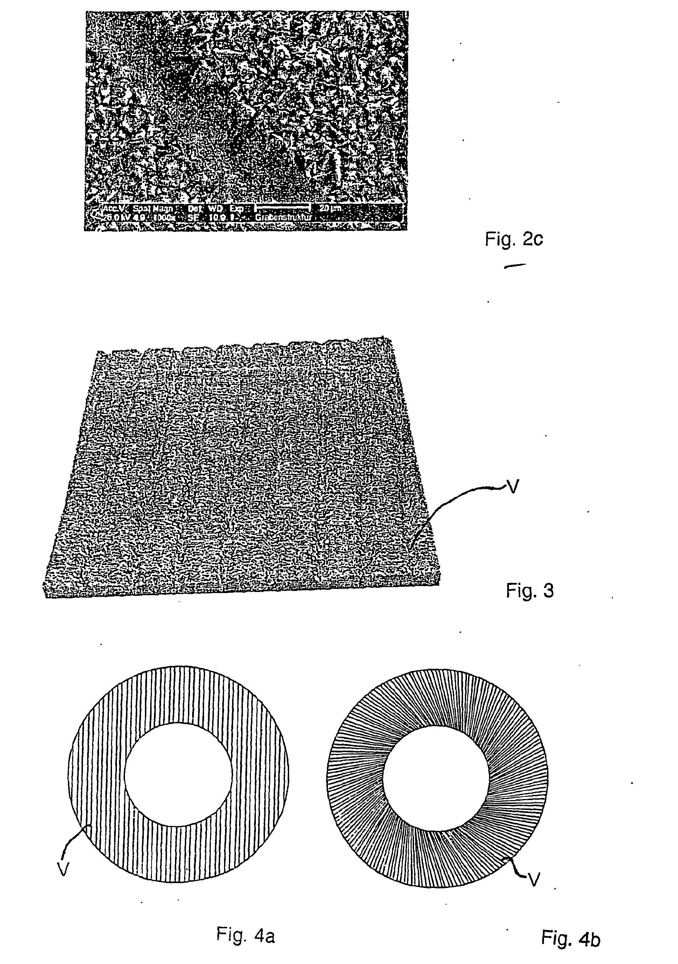

Die Fig. 2a bis Fig. 2c zeigen in verschiedenen Vergrößerungen REM-Aufnahmen einer erfindungsgemäß erzeugten Diamantschicht. Auch hier weist die Diamantschicht einen mittleren maximalen Rauwert Rz von 1,1 auf. Ferner sind schräg zu einer mit T bezeichneten Gleitrichtung lineare Ausnehmungen V vorgesehen, die sich über die gesamte Breite der Diamantschicht erstrekken. Die Ausnehmungen V sind regelmäßig angeordnet; sie bilden parallele Linien mit einem konstanten Abstand. In Fig. 3 ist die Ausbildung der Diamantschicht nochmals perspektivisch gezeigt.

Die Dicke der Diamantschicht beträgt bei den durch das erfindungsgemäße Verfahren hergestellten Gleitelementen zweckmäßigerweise zwischen 0,1 µm und 50 µm, vorzugsweise 1 bis 20 µm. Dabei wird bevorzugt eine Diamantschicht mit einer <111> Texturierung eingestellt. Zur Erläuterung wird auf die DE 100 27 427.7 verwiesen. Daneben kann aber auch eine <110> Texturierung eingestellt werden. Bei dem in den Fig. 2 und Fig. 3 gezeigten Ausführungsbeispiel beträgt die Schichtdicke der Diamantschicht 12 µm. Die Breite der linearen Ausnehmungen V beträgt etwa 20 µm und die Tiefe der Ausnehmungen V beträgt etwa 5 µm. Beim vorliegenden Ausführungsbeispiel beträgt die Tiefe der Ausnehmungen V also etwa das 4,5-fache des mittleren maximalen Rauwerts Rz. Allgemein hat es sich als zweckmäßig erwiesen, dass die Tiefe der Ausnehmungen V größer als das 2-fache, vorzugsweise größer als das 3-fache und besonders bevorzugt größer als das 4-fache des mittleren maximalen Rauwerts Rz ist.

In den Fig. 4a und b sind mit einer Diamantschicht versehene Gleitringe gezeigt. Auch hier sind in der Diamantschicht wiederum lineare Ausnehmungen V vorgesehen. Bei dem in Fig. 4a gezeigten Gleitring sind die Ausnehmungen V parallel zueinander in einem regelmäßigen Abstand angeordnet. Bei dem in Fig. 4b gezeigten Gleitring verlaufen die Ausnehmungen von einer inneren Umfangsfläche zu einer äußeren Umfangsfläche schräg zur Radialrichtung.

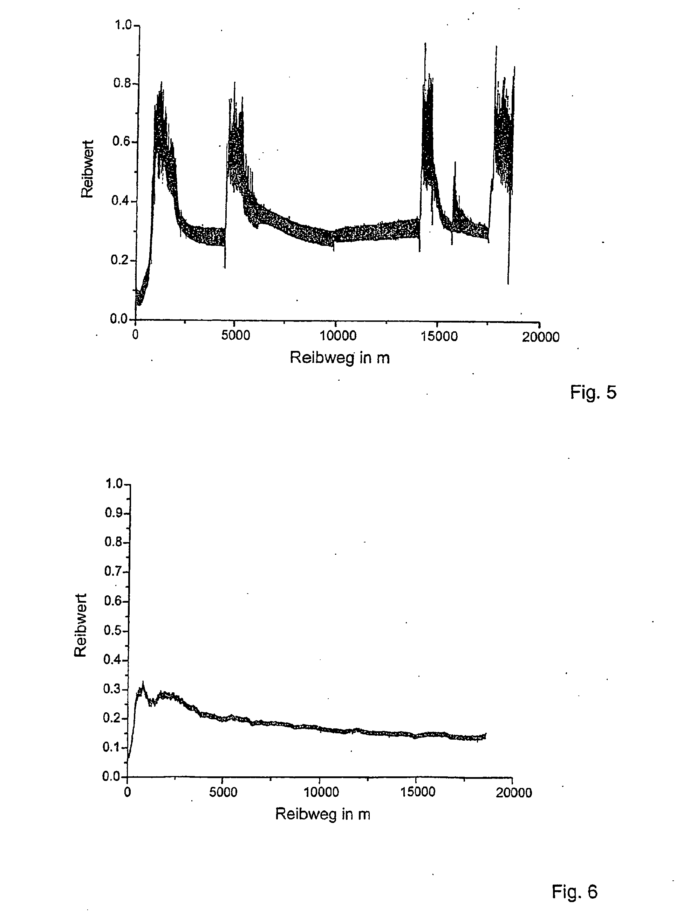

In den Fig. 5 und 6 sind die Ergebnisse von Trockenlauftests im Vergleich gezeigt. Dabei ist über dem Reibweg jeweils der Reibwert aufgetragen. Die in Fig. 5 wiedergegebenen Ergebnisse sind erzielt worden unter Verwendung von Gleitringen, welche mit einer Diamantschicht - wie sie z. B. in Fig. 1 gezeigt ist - beschichtet sind. Die in Fig. 6 gezeigten Ergebnisse sind erzielt worden mit Gleitringen, welche mit einer erfindungsgemäßen Diamantschicht beschichtet sind, wie sie z. B. in Fig. 2 bis 4 gezeigt ist. Bei den Messungen hat die Flächenpressung 0,2 N/mm², die Rotationsgeschwindigkeit 1,3 m/s und die Laufzeit 4 Stunden betragen. Es zeigt sich, dass die mit den erfindungsgemäßen Diamantschichten beschichteten Gleitelemente drastisch bessere Trockenlaufeigenschaften aufweisen. Die Diamantschicht ist nach einer Testzeit von 4 Stunden noch vollständig intakt. Es sind keinerlei Schichtabplatzungen zu beobachten.

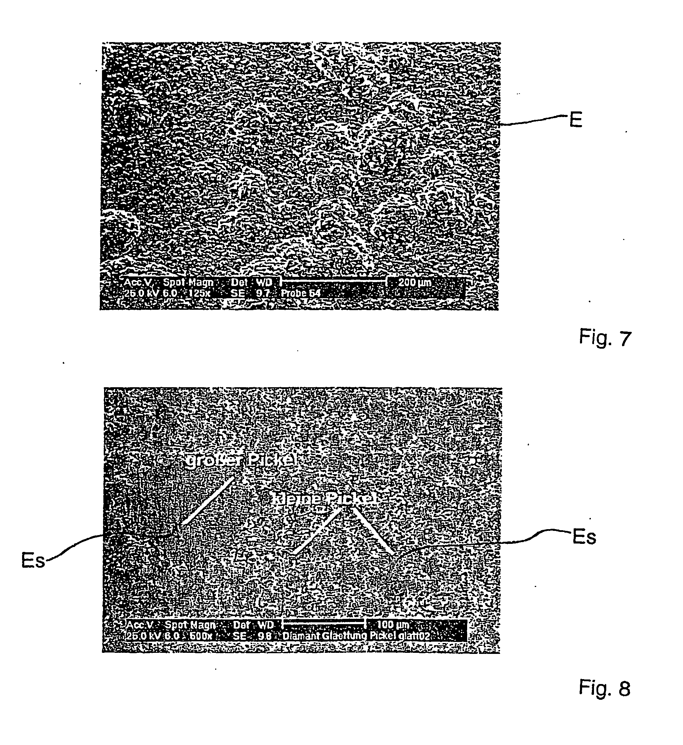

In Fig. 7 ist eine REM-Aufnahme einer herkömmlichen, mittels eines CVD-Verfahrens hergestellten Diamantschicht gezeigt. Derartige Diamantschichten weisen häufig Erhebungen E auf. Solche Erhebungen E sind in der Regel unerwünscht. Nach dem Gegenstand der vorliegenden Erfindung lassen sich gleichwohl auch Diamantschichten mit derartigen Erhebungen E zur Herstellung von Gleitelementen verwenden.

Fig. 8 zeigt eine REM-Aufnahme der Diamantschicht eines Gleitelements. Sie ist hergestellt durch Abtragen der in Fig. 7 gezeigten Erhebungen E z. B. mittels Läppen. Es verbleiben Erhebungsstümpfe Es. Eine tribologisch beanspruchte Fläche wird bei diesem Ausführungsbeispiel lediglich durch die Summe der über die Oberfläche der Diamantschicht herausstehenden Erhebungsstümpfe Es gebildet. Beim Betrieb anfallender Abrieb kann sich hier um die Erhebungsstümpfe Es ablagern. Selbstverständlich können die in Fig. 8 gezeigten Erhebungsstümpfe Es zusätzlich kombiniert werden mit z. B. den in den Fig. 2 bis 4 gezeigten Ausnehmungen. In diesem Fall weisen die vorgeschlagenen-Gleitelemente hervorragende Einlaufeigenschaften auf. Der beim Einlaufen auftretende relativ hohe Verschleiß führt dazu, dass insbesondere die Erhebungsstümpfe Es abgetragen werden. Der Abrieb wird während des Einlaufens in die Ausnehmungen V transportiert. Dabei wird die Oberfläche der Diamantschicht kaum beschädigt, weil die Erhebungsstümpfe Es sich über diese erheben. Nach dem Einlaufen sind die Erhebungsstümpfe Es im Wesentlichen abgetragen. Der durch das Einlaufen hervorgerufene Abrieb ist z. T. in den Ausnehmungen aufgenommen. Die Diamantschicht ist durch das Einlaufen kaum verschlissen. Sie weist eine besonders hohe Lebensdauer auf. Außerdem können durch die Erhebungsstümpfe Es eventuelle beim Abscheiden der Diamantschicht gebildete Schichtdickendifferenzen ausgeglichen werden.

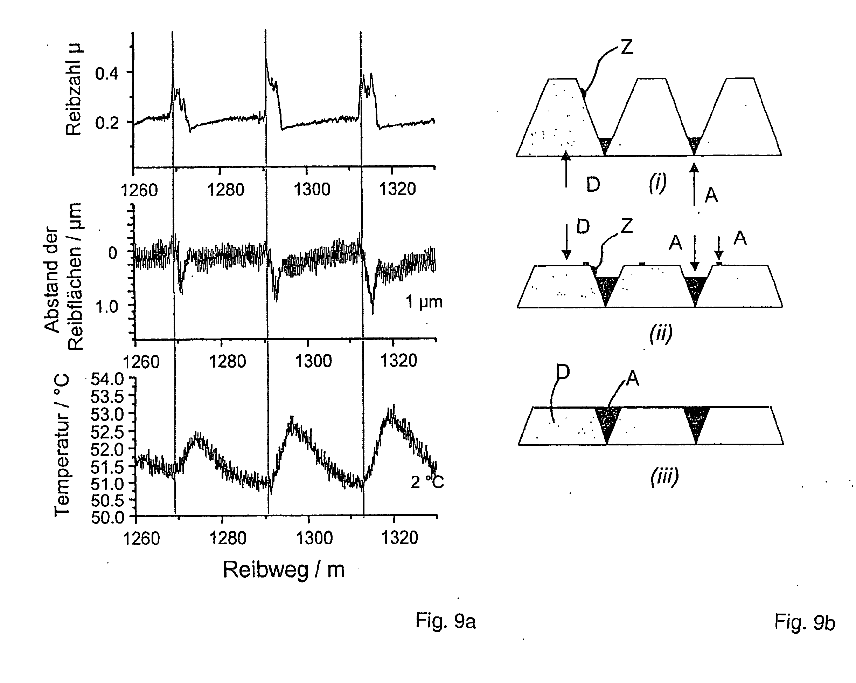

In Fig. 9a sind verschiedene Messergebnisse über dem Reibweg gezeigt. Es handelt sich dabei um die Temperatur in °C, den Abstand der Reibflächen in µm und die Reibzahl µ. Die Ergebnisse zeigen die Wirkungen eines zwischen die Reibflächen eingebrachten Abriebs. Gelangt Abrieb zwischen die Reibflächen, so erhöht sich die Temperatur, der Abstand der Reibflächen nimmt zu. Gleichzeitig erhöht sich sprunghaft die Reibzahl.

In Fig. 9b ist schematisch die Entwicklung einer herkömmlichen Diamantschicht beim Trockenlaufen gezeigt. Zunächst brechen die Kristallspitzen der Diamantkristalle D (siehe Fig. 9b (i)). Ein dadurch gebildeter Abrieb A gelangt in die zwischen den Diamantkristallen D gebildeten Vertiefungen Z (siehe Fig. 9b (ii)). Sobald die Vertiefungen Z vollständig mit Abrieb A gefüllt sind (siehe Fig. 9b (iii)) wird der Abrieb A auf der Oberfläche bewegt. Es kommt nach kurzer Zeit zu einem katastrophalen Verschleiß, insbesondere zum Abplatzen der Diamantschicht und damit zum Versagen des Gleitelements.

Die Herstellung der erfindungsgemäßen Gleitelemente kann grundsätzlich auf zwei Wegen erfolgen. Nach einem ersten Weg wird zunächst ein, beispielsweise aus SiC hergestelltes, Substrat bereitgestellt. In das Substrat werden anschließend in herkömmlicher Art und Weise Ausnehmungen V eingearbeitet. Das kann durch mechanisches Abtragen mit diamantbeschichteten Werkzeugen erfolgen. Auch ein Abtragen mittels herkömmlicher LASER ist möglich. In jedem Fall werden Ausnehmungen V in einer vorgegebenen Anordnung in die Oberfläche des Substrats eingearbeitet. Bei den Ausnehmungen V kann es sich um grabenartige Strukturen oder Mulden handeln. Zweckmäßigerweise bilden die Ausnehmungen V ein vorgegebenes regelmäßiges Muster.

Sie weisen eine Tiefe von 2 bis 10 µm und einen Durchmesser bzw. eine Breite von 8 bis 30 µm auf. Das so vorbereitete Substrat wird anschließend mittels herkömmlicher CVD-Verfahren beschichtet. Die Schichtdicke der aufgetragenen Diamantschicht beträgt 8 bis 10 µm. Die Parameter werden so eingestellt, dass die zuvor in das Substrat eingebrachten Ausnehmungen V durch die Diamantschicht abgebildet werden.

Nach einem zweiten Weg können die Ausnehmungen V auch erst nach dem Aufbringen der Diamantenschicht hergestellt werden. Zu diesem Zweck werden die Ausnehmungen ebenfalls mechanisch, z. B. mittels Sägen, oder vorzugsweise mittels Laserbearbeitung in die Oberfläche der Diamantschicht eingearbeitet. Bei der Laserbearbeitung findet eine Umwandlung der behandelten Flächen im Grafit statt. Es bilden sich dabei besonders glatte Ausnehmungen, durch welche der Abrieb leicht abtransportiert werden kann.

### Bezugszeichenliste

- T: Transportrichtung des Abriebs
- V: Ausnehmung
- E: Erhebung
- Es: Erhebungsstumpf
- D: Diamantkristall
- Z: Zwickel
- A: Abrieb

## Patentansprüche

1. Verfahren zur Herstellung eines Gleitelements, bei dem auf einer Oberfläche eines Substrats eine Diamantschicht mit einem mittleren maximalen Rauwert Rz vorgesehen ist, wobei die Diamantschicht reproduzierbare Ausnehmungen (V) zur Aufnahme von Abrieb (A) aufweist, mit folgenden Schritten:
Herstellen von Ausnehmungen (V) einer vorgegebenen Tiefe in der Oberfläche des Substrats und
Aufbringen einer Diamantschicht mittels eines CVD-Verfahrens auf die Oberfläche derart, dass der mittlere maximale Rauwert Rz der Diamantschicht kleiner ist als die Tiefe der Ausnehmungen (V).

2. Verfahren nach Anspruch 1, wobei die Ausnehmungen (v) mechanisch, durch Ätzen oder mittels LASER hergestellt werden.

3. Verfahren nach einem der Ansprüche 1 oder 2, wobei der mittlere maximale Rauwert Rz im Bereich von 0,1 bis 5,0 µm ist.

4. Verfahren nach einem der vorhergehenden Ansprüche, wobei die Ausnehmungen (V) als lineare Strukturen ausgebildet werden.

5. Verfahren nach einem der vorhergehenden Ansprüche, wobei die linearen Strukturen schräg oder quer zu einer Gleitrichtung (T) verlaufend ausgebildet werden.

6. Verfahren nach einem der vorhergehenden Ansprüche, wobei die Ausnehmungen (V) zum Rand der Diamantschicht hin sich öffnend ausgebildet werden, so dass darin aufgenommener Abrieb (A) abführbar ist.

7. Verfahren nach einem der vorhergehenden Ansprüche, wobei die linearen Strukturen in einer Breite zwischen 0,5 µm und 10 mm hergestellt werden.

8. Verfahren nach einem der vorhergehenden Ansprüche, wobei die Ausnehmungen (V) als netzartiges Muster ausgebildet werden.

9. Verfahren nach einem der vorhergehenden Ansprüche, wobei die Ausnehmungen (V) muldenartig ausgebildet werden.

10. Verfahren nach einem der vorhergehenden Ansprüche, wobei ein Anteil von 1 bis 95% der Oberfläche der Diamantschicht durch die Ausnehmungen (V) gebildet wird.

11. Verfahren nach einem der vorhergehenden Ansprüche, wobei das Substrat aus einer Keramik, vorzugsweise SiC, einem Metall oder einem Metall-Keramik-Verbundwerkstoff hergestellt wird.

12. Verfahren nach einem der vorhergehenden Ansprüche, wobei die Diamantschicht in einer <111> und/oder <110> Texturierung hergestellt wird.

## Claims

1. Method for producing a gliding element, in which a diamond layer with an average maximum roughness value Rz is provided on a surface of a substrate wherein the diamond layer has reproducible recesses (V) to collect abrasion (A), having the following steps:
Production of recesses (V) of a specified depth in the surface of the substrate and
Application of a diamond layer via a CVD method on the surface so that the average maximum roughness value Rz of the diamond layer is less than the depth of the recesses (V).

2. Method as defined in claim 1, wherein the recesses (V) are produced mechanically by etching or via LASER.

3. Method as defined in one of the claims 1 or 2, wherein the average maximum roughness value Rz is in the range from 0.1 to 5.0 µm.

4. Method as defined in one of the preceding claims, wherein the recesses (V) are formed as linear structures.

5. Method as defined in one of the preceding claims, wherein the linear structures running slanted or crosswise to a direction of gliding (T) are formed.

6. Method as defined in one of the preceding claims, wherein the recesses (V) are formed to open towards an edge of the diamond layer so that the abrasion (A) contained therein can be abducted.

7. Method as defined in one of the preceding claims, wherein the linear structures are produced to have a width between 0.5 µm and 10 mm.

8. Method as defined in one of the preceding claims, wherein the recesses (V) are formed as a net-like pattern.

9. Method as defined in one of the preceding claims, wherein the recesses (V) are formed like troughs.

10. Method as defined in one of the preceding claims, wherein a portion from 1 to 95% of the surface of the diamond layer is created by the recesses (V).

11. Method as defined in one of the preceding claims, wherein the substrate is produced from a ceramic, preferably SiC, a metal or a metal-ceramic composite material.

12. Method as defined in one of the preceding claims, wherein the diamond layer is produced with a <111> and/or <110> texturing.

## Revendications

1. Procédé de fabrication d'un élément à glissement, suivant lequel il est prévu sur une surface d'un substrat une couche diamantée ayant une valeur de rugosité moyenne maximale Rz, la couche diamantée présentant des évidements (V) reproductibles pour la réception de poussière d'abrasion (A), comprenant les étapes suivantes :
réalisation d'évidements (V) d'une profondeur prédéfinie dans la surface du substrat et
application d'une couche diamantée au moyen d'un procédé CVD sur la surface de façon que la valeur de rugosité moyenne maximale Rz soit plus petite que la profondeur des évidements (V).

2. Procédé selon la revendication 1, suivant lequel les évidements (V) sont réalisés mécaniquement, par gravure ou au moyen d'un laser.

3. Procédé selon l'une des revendications 1 ou 2, suivant lequel la valeur de rugosité moyenne maximale Rz se situe dans la plage allant de 0,1 à 0,5 µm.

4. Procédé selon l'une des revendications précédentes, suivant lequel les évidements (V) sont réalisés sous forme de structures linéaires.

5. Procédé selon l'une des revendications précédentes, suivant lequel les structures linéaires s'étendent obliquement ou transversalement à une direction de glissement (T).

6. Procédé selon l'une des revendications précédentes, suivant lequel les évidements (V) sont conçus comme s'ouvrant vers le bord de la couche diamantée, de façon que la poussière d'abrasion (A) qui y est contenue puisse être évacuée.

7. Procédé selon l'une des revendications précédentes, suivant lequel les structures linéaires sont réalisées selon une largeur comprise entre 0,5 µm et 10 mm.

8. Procédé selon l'une des revendications précédentes, suivant lequel les évidements (V) sont réalisés sous forme de motif réticulé.

9. Procédé selon l'une des revendications précédentes, suivant lequel les évidements (V) sont réalisés en forme d'auge.

10. Procédé selon l'une des revendications précédentes, suivant lequel une part de 1 à 95 % de la surface de la couche diamantée est formée par les évidements (V).

11. Procédé selon l'une des revendications précédentes, suivant lequel le substrat est réalisé dans un céramique, de préférence SiC, un métal ou un matériau composite métal-céramique.

12. Procédé selon l'une des revendications précédentes, suivant lequel la couche diamantée est réalisée dans une texturation <111> et/ou <110>.
